# NEUE EUROPÄISCHE PATENTSCHRIFT

(11) **EP 2 537 418 B2**
(45) Veröffentlichungstag und Bekanntmachung des Hinweises auf die Entscheidung über den Einspruch: **14.11.2018**
(45) Hinweis auf die Patenterteilung: 17.06.2015
(21) Anmeldenummer: 12004268.4
(22) Anmeldetag: 05.06.2012
(51) Int. Cl.: F24C 7/08, F24C 15/32, A23L 5/10, G05D 23/19

(54) **Verfahren zum Garen eines Garguts mittels Dampf**
Method for cooking a food item using steam
Procédé de cuisson d'un produit de cuisson au moyen de vapeur

(30) Priorität: 21.06.2011 CH 10542011
(43) Veröffentlichungstag der Anmeldung: 26.12.2012
(73) Patentinhaber: V-Zug AG, 6300 Zug (CH)
(72) Erfinder: Dohner, Nina, 8800 Thalwill (CH); Bucher, Erwin, 6206 Neuenkirch (CH)
(74) Vertreter: Sutter, Kurt

(56) Entgegenhaltungen:
- EP-A1- 0 335 796
- EP-A1- 1 281 327
- EP-A1- 2 363 048
- EP-A2- 0 723 115
- EP-A2- 1 445 677
- EP-A2- 1 770 335
- DE-A1-102007 008 894
- DE-B4-102004 040 655
- FR-A1- 2 552 628
- JP-A- 2007 198 697
- M.A. SHEARD ET AL: "Optimum heat treatments for 'sous vide' cook-chill products", FOOD CONTROL, Bd. 6, Nr. 1, 1. Januar 1995 (1995-01-01), Seiten 53-56, XP55042651, ISSN: 0956-7135, DOI: 10.1016/0956-7135(95)91454-S
- BALDWIN D: "A Practical Guide To Sous Vide Cooking", 20081127, Nr. Draft 0.4f, 27. November 2008 (2008-11-27), Seiten 1-38, XP007915110,
- MIELE: 'COMBI-DAMPFGARER DGC 5080 XL. M-NR. 07 673 810' GEBRAUCHSANWEISUNG 25 März 2010,
- MIELE: 'COMBI-DAMPFGARER DGC 5080 XL DGC 5085 XL. M.-NR. 07 673 840' ANWENDUNGSHINWEISE 18 Januar 2009,

## Beschreibung

### Gebiet der Erfindung

Die Erfindung betrifft ein Verfahren zum Garen eines Garguts in einem Gargerät.

### Hintergrund

EP 723115 beschreibt ein Verfahren zum Garen von Fleisch, bei welchem in einer Garguttemperatur-Regelphase der Garraum mit Heissluft derart erwärmt wird, dass die Garguttemperatur einem zeitabhängigen Garguttemperatur-Sollwertverlauf folgt. Auf diese Weise kann zu einem gewünschten Zeitpunkt eine bestimmte Garguttemperatur (Kerntemperatur) erreicht werden. Es zeigt sich jedoch, dass es relativ lange braucht, bis Gargut auf diese Weise gegart ist, da zur Vermeidung von lokalen Überhitzungen an der Fleischoberfläche die Rampe des Garguttemperatur-Sollwertverlaufs nicht zu steil gewählt werden darf.

### Darstellung der Erfindung

Es stellt sich die Aufgabe, ein Verfahren dieser Art bereitzustellen, das eine schnelle und dennoch schonende Garung eines Garguts erlaubt. Diese Aufgabe wird vom Gegenstand des unabhängigen Anspruchs gelöst.

Demgemäss wird die Garguttemperatur gemessen. Weiter wird mindestens während einer Garguttemperatur-Regelphase der Gardauer eine Garraumtemperatur im Garraum ausserhalb des Garguts derart gesteuert, dass die Garguttemperatur einem zeitabhängigen Garguttemperatur-Sollwertverlauf folgt. Dabei wird der Garraum von erhitztem Dampf erwärmt (allenfalls unter Zuhilfenahme weiterer Heizmittel), wodurch ein effizienter Wärmeeintrag in das Gargut ermöglicht wird, ohne dass die Garraumtemperatur sehr hoch sein muss. Um dabei ein Auswaschen des Garguts durch den Dampf zu verhindern, wird das Gargut in einem Beutel im Garraum angeordnet.

Der Garguttemperatur-Sollwertverlauf wird derart ausgelegt, dass er über die Zeit bis zu einer End-Garguttemperatur ansteigt, so dass am Schluss der Garguttemperatur-Regelphase die gewünschte Kerntemperatur erreicht wird. In diesem Fall kann die Gardauer oder die Endzeit, zu welcher die Speisen fertig sein sollen, in der in EP 723115 beschriebenen Weise vorgegeben werden.

Dabei wird darauf geachtet, dass die Garraumtemperatur nie allzu hoch ansteigt. Dies kann in einer bevorzugten Ausführung erreicht werden, indem die Garraumtemperatur derart gesteuert wird, dass sie die End-Garguttemperatur um höchstens 20°, insbesondere höchstens 15°, insbesondere höchstens 10°, übersteigt. Alternativ oder zusätzlich kann die Garraumtemperatur so gesteuert werden, dass sie eine vorgegebene feste Grenztemperatur nicht übersteigt, wobei die feste Grenztemperatur ein Wert kleiner 90°C, insbesondere kleiner 80°C, insbesondere kleiner 70°C ist.

Wird die entsprechende Grenztemperatur erreicht, so wird nötigenfalls vom Garguttemperatur-Sollwertverlauf nach unten abgewichen, um sicherzustellen, dass die Garraumtemperatur nicht weiter ansteigt.

Die Erfindung ist besonders geeignet zum Garen von Fleisch (wobei Fisch in diesem Zusammenhang auch unter den Begriff Fleisch fallen soll), da dort der Garprozess nach Erreichen der gewünschten Kerntemperatur abgeschlossen werden kann. Das Verfahren kann jedoch auch für anderes Gargut, z.B. Gemüse, eingesetzt werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 die wichtigsten Komponenten eines Gargeräts und
Fig. 2 den qualitativen Verlauf der Garguttemperatur TGG, der Garraumtemperatur TGR und der Garguttemperatur-Sollwerts TGS.

### Wege zur Ausführung der Erfindung

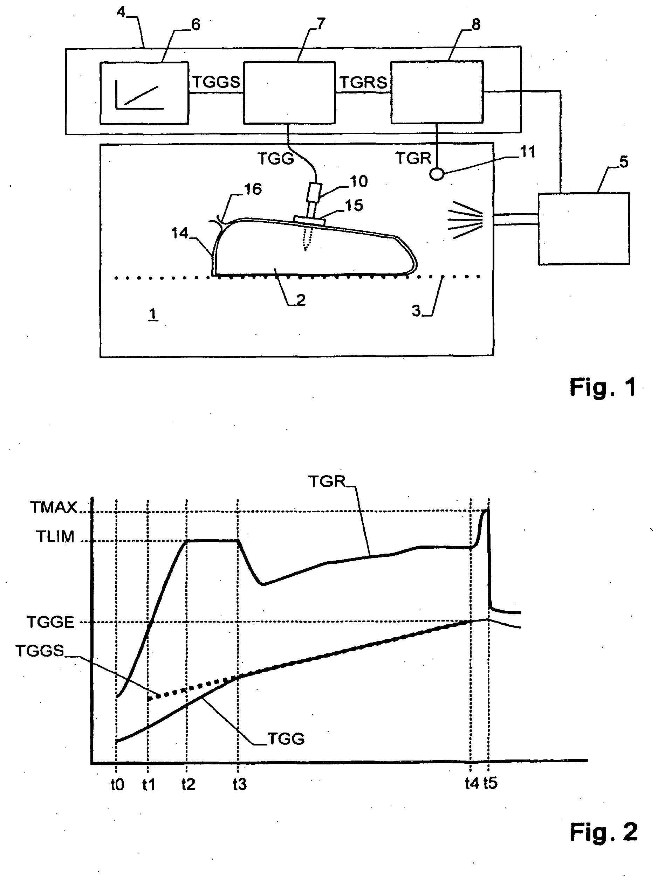

Das Gargerät gemäss Fig. 1 besitzt einen Garraum 1 zur Aufnahme des Garguts 2, z.B. auf einem Blech oder Gitter 3. Das Gerät besitzt weiter eine Steuerung 4 und einen Dampfgenerator 5. Der Dampfgenerator 5 dient zum Erhitzen des Garraums 1 mit Dampf. Es können noch andere Mittel zum Heizen des Garraums vorhanden sein, z.B. resistive Heizungen. Beim Gargerät handelt es sich vorzugsweise um einen Backofen mit Dampfgarfunktion, es kann sich aber z.B. auch um ein reines Dampfgargerät handeln.

Die Steuerung 4 umfasst u.a. Mittel 6 zum Erzeugen eines Garguttemperatur-Sollwertverlaufs, d.h. eines zeitabhängigen Sollwerts TGGS der Garguttemperatur TGG. Dabei kann es sich z.B. um einen Speicher und Rechenmittel handeln, die in bekannter Weise einen solchen Verlauf erzeugen. Vorzugsweise ist das Mittel 6 so ausgelegt, dass der Garguttemperatur-Sollwertverlauf in einer Garguttemperatur-Regelphase des Geräts von einem Startwert monoton, insbesondere streng monoton, bis zu einer End-Garguttemperatur TGGE ansteigt.

Weiter umfasst die Steuerung 4 einen ersten Regler 7 und einen zweiten Regler 8, welche jeweils einen Istwert mit einem Sollwert vergleichen und eine Steuergrösse so erzeugen, dass sich der Istwert dem Sollwert angleicht.

Der erste Regler 7 ist mit einer Garguttemperatur-Messsonde 10 verbunden. Diese misst die Garguttemperatur TGG ungefähr im Zentrum des Garguts 2, d.h. die sogenannte Kerntemperatur. Als Sollwert wird dem ersten Regler 7 der Sollwert TGGS der Garguttemperatur vom Mittel 6 zugeführt. Der Regler 7 vergleicht die Garguttemperatur TGG und deren Sollwert TGGS und erzeugt daraus einen Garraumtemperatur-Sollwert TGRS, welcher so gewählt wird, dass die Garguttemperatur TGG sich zu deren Sollwert TGGS hin entwickelt.

Der zweite Regler 8 ist mit einer Garraumtemperatur-Messonde 11 verbunden. Diese misst die Garraumtemperatur TGR. Der zweite Regler empfängt den Sollwert TGGS vom ersten Regler, vergleicht diesen mit der aktuellen Garraumtemperatur TGR und erzeugt daraus ein Steuersignal für den Dampfgenerator. Dieses Steuersignal steuert die Dampferzeugung und ist so gewählt, dass die Garraumtemperatur TGR sich zu deren Sollwert TGRS hin entwickelt.

Die Regler 7 und/oder 8 oder generell die Steuerung 4 sind dabei vorteilhaft so ausgestaltet, dass die Garguttemperatur eine Grenztemperatur TLIM nicht überschreitet, zumindest während einem Teil des Garprozesses, und dies auch dann nicht, wenn eine höhere Garraumtemperatur zum Erreichen des Sollwerts TGGS an sich wünschbar wäre. Auf diese Weise kann eine thermische Beeinträchtigung der Gargutoberfläche vermieden werden. Die Grenztemperatur TLIM wird vorzugsweise abhängig von der gewünschten End-Garguttemperatur TGGE gewählt, insbesondere so, dass die Grenztemperatur TLIM um höchstens 20°, insbesondere höchstens 15°, insbesondere höchstens 10°, oberhalb der End-Garguttemperatur TGGE liegt. Zusätzlich oder alternativ kann die Grenztemperatur TLIM jedoch auch unabhängig von der End-Garguttemperatur gewählt werden. In diesem Falle liegt der Wert der Grenztemperatur TLIM vorzugsweise bei höchstens 90°C, insbesondere höchstens 80°C, insbesondere höchstens 70°C. Die Grenztemperatur TLIM hängt in der Regel vom zu garenden Gut ab.

Im Folgenden wird das mit dem soweit beschriebenen Gargerät durchführbare Garverfahren beschrieben. Dabei ist zu betonen, dass das beschriebene Garverfahren nur einem von mehreren möglichen Betriebsmodi des Gargeräts entspricht. In der Regel wird das Gargerät in der Lage sein, Speisen auch mit anderen, konventionellen Verfahren zu garen.

Möchte der Benutzer den hier beschriebenen Betriebsmodus auswählen, so packt er das Gargut 2 vor der Garung in einen Beutel 14 ein. Dabei handelt es sich vorteilhaft um einen flexiblen Beutel, der gasdicht abgeschlossen werden kann. Optional kann der Beutel 14 ein Überdruckventil besitzen, um aus dem Gargut austretende Gase an die Umgebung abzugeben.

Vorteilhaft wird der Beutel mit dem Gargut vor dem Garen mindestens teilweise evakuiert, so dass er gegenüber dem Garraum 1 unter Unterdruck steht und gut am Gargut anliegt.

Der Beutel 14 bietet verschiedene Vorteile. Einerseits verhindert er, wie bereits erwähnt, ein Auswaschen des Garguts durch auskondensierenden Dampf. Weiter hält er Saft, sowie allfällige Marinade und Gewürze beim Gargut, insbesondere wenn er mindestens teilweise evakuiert ist.

Er verhindert auch ein Austrocknen des Garguts, wodurch der Wärmeübergang im Gargut verbessert wird, was u.a. zur Folge hat, dass die Kerntemperatur bzw. Garguttemperatur schneller erhöht werden kann.

Eine mindestens teilweise Evakuation des Beutels 14 hat auch den Vorteil, dass der Wärmeübergang vom Garraum 1 zum Gargut besser ist, als wenn der Beutel nicht am Gargut anliegen würde.

Vor dem Garen wird die Garguttemperatur-Messsonde 10 in das Gargut eingeführt. In der in Fig. 1 gezeigten Ausführung wurde die Messsonde 10 durch ein Dichtungsplättchen 15 und den Beutel 14 in das Gargut 2 gestochen. Aufgabe des Dichtungsplättchens 15 ist es, die Durchtrittsstelle der Messsonde 10 durch den Beutel abzudichten. Das Dichtungsplättchen 15 besteht vorzugsweise aus einem elastischen Material mit Dichteigenschaften, wie z.B. einem Elastomer, und ist auf den Beutel 14 aufgeklebt. Denkbar sind auch andere Dichtungsmittel geeigneter Art.

Alternativ dazu kann die Garguttemperatur-Messsonde 10 auch in das Gargut 2 eingebracht werden, bevor dieses in den Beutel 14 gelegt wird. In diesem Fall kann die Garguttemperatur-Messsonde 10 z.B. drahtlos mit der Steuerung 4 kommunizieren, oder ein Kabel kann durch die Beutelöffnung 16 nach aussen geführt werden.

Das mit der Messsonde 10 versehene und in den Beutel 14 eingeschlossene Gargut 2 wird sodann in den Garraum 1 eingebracht und das Garprogramm wird gestartet. Die folgenden Schritte dieses Garprogramms laufen automatisch unter Kontrolle der Steuerung 4 ab. Der Verlauf der Garguttemperatur TGG, des Garguttemperatur-Sollwerts TGGS und der Garraumtemperatur TGR im Verlauf des Garprogramms sind in Fig. 2 dargestellt.

Das Garprogramm startet zu einer Zeit t0. Zunächst wird der Dampfgenerator 5 aktiviert, so dass die Garraumtemperatur TGR anzusteigen beginnt. (Optional kann der Garraum zusätzlich auch noch z.B. über eine Widerstandsheizung oder ein anderes geeignetes Heizmittel erwärmt werden.) Zu einer Zeit t1 (welche mit der Zeit t0 übereinstimmen oder gewisse Zeit nach der Zeit t0 liegen kann), beginnt die Garguttemperatur-Regelphase, während der die Soll-Garguttemperatur vom Mittel 6 vorgegeben wird und die Regler 7 und 8 in der oben beschriebenen Weise arbeiten. Im vorliegenden Ausführungsbeispiel erstreckt sich die Garguttemperatur-Regelphase über das Zeitintervall t1 bis t4.

Der vom Mittel 6 erzeugte Garguttemperatur-Sollwertverlauf ist beispielhaft in Fig. 2 gestrichelt als Rampe eingezeichnet, welche z.B. von Umgebungstemperatur bei Zeit t1 bis zur End-Garguttemperatur TGGE zur Zeit t4 linear ansteigt. Die Zeitspanne t1 bis t4 kann abhängig von der Art des Garguts vorgegeben sein. Alternativ oder zusätzlich kann sie auch vom Benutzer durch Angabe des Zeitpunkts t4 in gewissen Schranken vorgegeben werden, z.B. in der in EP 723115 beschriebenen Weise. Die Dauer von t1 bis t4 beträgt vorzugsweise 0.5 - 3 Stunden, insbesondere 1 - 2 Stunden, für Fleisch.

Im Beispiel gemäss Fig. 2 ist die Temperatur des Garguts zum Zeitpunkt t1 relativ tief (z.B. weil das Gargut aus dem Kühlschrank kommt), weshalb der erste Regler 7 einen relativ hohen Garraumtemperatur-Sollwert TGRS vorgeben möchte, was jedoch durch Erreichen der Obergrenze TLIM zur Zeit t2 verhindert wird. Im Zeitintervall t2 bis t3 wird im Beispiel nach Fig. 2 der Garraumtemperatur-Sollwert TGRS auf TLIM begrenzt. Dadurch wird ein übermässiges Erhitzen der Gargutoberfläche vermieden. Dabei handelt es sich lediglich um ein Beispiel - je nach Gargut, Gewicht und Temperatur sowie weiteren Parametern kann die Obergrenze TLIM auch in anderen Prozessphasen oder gar nie erreicht werden.

Auf jeden Fall steigt die Garguttemperatur jedoch an, und sie erreicht zur Zeit t3 einen derart hohen Wert, dass der Regler 7 einen Garraumtemperatur-Sollwert TGRS tiefer als TLIM vorgibt und eine eigentliche Regelung der Garguttemperatur TGG auf den jeweiligen Sollwert TGGS stattfinden kann. So folgt die Garguttemperatur TGG nun dem Garguttemperatur-Sollwertverlauf, und zwar bis zum Zeitpunkt t4.

Im Beispiel gemäss Fig. 2 wird anschliessend an die Garguttemperatur-Regelphase ab Zeitpunkt t4 eine Hochtemperaturphase durchlaufen. Deren Ziel ist es, den aus dem Gargut ausgetretenen Saft zu klären sowie die Gargut-Oberfläche etwas zu bräunen, was insbesondere für ein Gargut aus Fleisch als vorteilhaft empfunden wird.

Hierzu wird in der Hochtemperaturphase die Garraumtemperatur während mindestens einer Minute auf mindestens 80°C gehalten, vorteilhaft während 1 bis 10 Minuten auf 80° bis 100°C.

Nach der Hochtemperaturphase sollte die Garraumtemperatur TGR möglichst schnell wieder abgesenkt werden, um Temperaturschäden im Innern des Garguts zu vermeiden. Hierzu kann der Garraum gelüftet werden, oder, allgemeiner gesagt, es findet in der Hochtemperaturphase eine verglichen zur Garguttemperatur-Regelphase verstärkte Lüftung statt.

Danach ist das Gargut fertig gegart und kann dem Garraum entnommen werden.

### Bemerkungen:

Der Dampfgenerator 5 kann Dampf bei ca. 100°C erzeugen. Denkbar ist jedoch auch die Verwendung eines Dampfgenerators 5, welcher überhitzten Dampf bei einer Temperatur oberhalb 100°C erzeugt.

Das beschriebene Verfahren eignet sich, wie eingangs erwähnt, besonders für Fleisch. In diesem Fall wird die End-Garguttemperatur TGGE entsprechend der allgemein bekannten vorteilhaften Kerntemperatur der jeweiligen Fleischsorte gewählt.

Das Verfahren kann jedoch z.B. auch für Gemüse eingesetzt werden. In diesem Falle sollte die Garguttemperatur am Schluss der Garguttemperatur-Regelphase eine gewisse Zeit auf der gewünschten End-Garguttemperatur TGGE gehalten werden.

Die Temperatur TGR im Garraum 1 liegt vorzugsweise während dem ganzen Verfahren unterhalb von 100 °C. Durch die Verwendung von Dampf ist dennoch ein guter Wärmeeintrag in das Gargut möglich.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Garen eines Garguts (2) in einem Gargerät mit einem Garraum (1) während einer Gardauer, bei welchem eine Garguttemperatur (TGG) gemessen wird und wobei mindestens während einer Garguttemperatur-Regelphase der Gardauer eine Garraumtemperatur (TGR) im Garraum ausserhalb des Garguts (2) derart gesteuert wird, dass die Garguttemperatur (TGG) einem zeitabhängigen Garguttemperatur-Sollwertverlauf folgt, wobei der Garraum (1) zumindest teilweise durch erhitzten Dampf erwärmt wird und dass das Gargut (2) in einem Beutel (14) im Garraum (1) angeordnet ist, wobei der Garguttemperatur-Sollwertverlauf derart ausgelegt wird, dass er über die Zeit monoton bis zu einer End-Garguttemperatur (TGGE) ansteigt, **dadurch gekennzeichnet, dass** die Garraumtemperatur (TGR) derart gesteuert wird, dass sie eine Grenztemperatur (TLIM) nicht überschreitet, wobei die Grenztemperatur (TLIM) abhängig von der End-Garguttemperatur (TGGE) gewählt ist.

2. Verfahren nach Anspruch 1, wobei die Grenztemperatur (TLIM) höchstens 20°, insbesondere höchstens 15°, insbesondere höchstens 10°, oberhalb der die End-Garguttemperatur (TGGE) liegt.

3. Verfahren nach einem der vorangehenden Ansprüche, wobei nach der Garguttemperatur-Regelphase eine Hochtemperaturphase durchgeführt wird, während der die Garraumtemperatur (TGR) während mindestens einer Minute auf mindestens 80°C gehalten wird.

4. Verfahren nach Anspruch 3, wobei in der Hochtemperaturphase die Garraumtemperatur (TGR) während 1 bis 10 Minuten auf 80° bis 100°C gehalten wird.

5. Verfahren nach einem der Ansprüche 3 oder 4, wobei nach der Hochtemperaturphase die Garraumtemperatur (TGR) durch gegenüber der Garguttemperatur-Regelphase verstärktes Lüften des Garraums (1) reduziert wird.

6. Verfahren nach einem der vorangehenden Ansprüche, wobei der Beutel (14) mit dem Gargut (2) vor dem Garen mindestens teilweise evakuiert wird.

7. Verfahren nach einem der vorangehenden Ansprüche, wobei
mit einem ersten Regler (7) die gemessene Garguttemperatur (TGG) mit einem Garguttemperatur-Sollwert (TGGS) abgeleitet aus dem Garguttemperatur-Sollwertverlauf verglichen und abhängig hiervon ein Garraumtemperatur-Sollwert (TGRS) erzeugt wird, und
mit einem zweiten Regler (8) die gemessene Garraumtemperatur (TGR) mit dem Garraumtemperatur-Sollwert (TGRS) verglichen wird und abhängig hiervon ein Dampfgenerator (5) gesteuert wird, wobei mit dem Dampfgenerator (5) der Dampf erzeugt wird.

8. Verfahren nach einem der vorangehenden Ansprüche, wobei das Gargut (2) Fleisch ist.

9. Verfahren nach einem der vorangehenden Ansprüche, wobei die Garguttemperatur (TGG) während dem Verfahren immer unterhalb 100°C liegt.

## Claims

1. Method for cooking food (2) in a cooking device with a cooking chamber (1) during a cooking period, wherein a food temperature (TGG) is measured and wherein at least during a food temperature regulating phase of the cooking period a cooking chamber temperature (TGR) in the cooking chamber outside the food (2) is controlled in such a way that the food temperature (TGG) follows a time-dependent desired food temperature function, wherein the cooking chamber (1) is at least partially heated up by heated steam and in that the food (2) is arranged in a bag (14) in the cooking chamber (1), wherein the desired food temperature function is chosen such that it rises monotonously up to an end food temperature (TGGE), **characterized in that** the cooking chamber temperature (TGR) is controlled in such a way that it doesn't surpass a limit temperature (TLIM), wherein the limit temperature (TLIM) is chosen depending on the end food temperature (TGGE).

2. Method according to claim 1, wherein the limit temperature (TLIM) is maximally 20°C, particularly maximally 15°C, particularly maximally 10°C, higher than the end food temperature (TGGE).

3. Method according to one of the preceding claims, wherein a high temperature phase is carried out after the food temperature regulating phase, during which the cooking chamber temperature (TGR) is kept at at least 80°C during at least one minute.

4. Method according to claim 3, wherein the cooking chamber temperature (TGR) is kept at 80° to 100°C during 1 to 10 minutes during the high temperature phase.

5. Method according to one of the claims 3 or 4, wherein, after the high temperature phase, the cooking chamber temperature (TGR) is reduced by a more intense ventilation of the cooking chamber (1) as compared to the food temperature regulating phase.

6. Method according to one of the preceding claims, wherein the bag (14) containing the food (2) is at least partially evacuated before cooking.

7. Method according to one of the preceding claims, wherein
the measured food temperature (TGG) is compared with a desired food temperature (TGGS) derived from the desired food temperature function by means of a first regulator (7) and, depending on this, a desired cooking chamber temperature (TGRS) is generated, and
the measured cooking chamber temperature (TGR) is compared to the desired cooking chamber temperature (TGRS) by means of a second regulator (8) and depending on this a steam generator (5) is controlled, wherein the steam is generated by the steam generator (5) .

8. Method according to one of the preceding claims, wherein the food (2) to be cooked is meat.

9. Method according to one of the preceding claims, wherein the food temperature (TGG) is always below 100°C during a duration of the method.

## Revendications

1. Procédé pour cuire d'aliments (2) dans un dispositif de cuisson avec un espace de cuisson (1) pendant un temps de cuisson, une température d'aliments (TGG) étant mesurée et une température de l'espace de cuisson (TGR) hors des aliments (2) étant commandée au moins pendant une phase de régulation de température d'aliments de sorte que la température d'aliments (TGG) suit une évolution en fonction du temps de la température d'aliments désirée, l'espace de cuisson (1) étant chauffé au moins partiellement à l'aide de vapeur chauffée et en ce que les aliments (2) sont arrangés dans un sac (14) dans l'espace de cuisson (1) et l'évolution en fonction du temps de la température d'aliments désirée étant conçue de sorte qu'elle augmente en fonction du temps en mode monotone jusqu'à une température d'aliments finale (TGGE), **caractérisé en ce que** la température de l'espace de cuisson (TGR) est commandée de sorte qu'elle ne dépasse pas une température limite (TLIM), la température limite (TLIM) étant choisie dépendant de la température d'aliments finale (TGGE).

2. Procédé selon la revendication 1, la température limite (TLIM) étant au maximum 20°C, particulièrement au maximum 15°C, particulièrement au maximum 10°C, au-dessus de la température d'aliment finale (TGGE).

3. Procédé selon l'une des revendications précédentes, après une phase de régulation de température d'aliments une phase d'haute température étant effectuée, pendant laquelle la température de l'espace de cuisson (TGR) étant gardée pendant au moins une minute à au moins 80°C.

4. Procédé selon la revendication 3, la température de l'espace de cuisson (TGR) étant gardée pendant 1 à 10 minutes à 80° jusqu'à 100°C dans la phase d'haute température.

5. Procédé selon la revendication 3 ou 4, après la phase d'haute température la température de l'espace de cuisson (TGR) étant réduite par une ventilation augmentée de l'espace de cuisson (1) par rapport à la phase de régulation de température d'aliments.

6. Procédé selon l'une des revendications précédentes, le sac (14) avec les aliments (2) étant au moins partiellement évacué avant la cuisson.

7. Procédé selon l'une des revendications précédentes,
la température d'aliments (TGG) mesurée avec un premier régulateur (7) étant comparée avec une température d'aliments désirée (TGGS) dérivée de l'évolution en fonction du temps de la température d'aliments désirée, et dépendant de cela, une température de l'espace de cuisson désirée (TGRS) étant générée, et
la température de l'espace de cuisson (TGR) mesurée avec un deuxième régulateur (8) étant comparée avec la température de l'espace de cuisson désirée (TGRS), et dépendant de cela, un générateur de vapeur (5) étant commandé, la vapeur étant générée avec le générateur de vapeur (5).

8. Procédé selon l'une des revendications précédentes, les aliments (2) étant de la viande.

9. Procédé selon l'une des revendications précédentes, la température d'aliments (TGG) étant toujours inférieure à 100°C pendant le procédé.
